# EUROPEAN PATENT SPECIFICATION

(11) **EP 0 925 720 B1**
(45) Date of publication and mention of the grant of the patent: **12.09.2001**
(21) Application number: 99200463.0
(22) Date of filing: 19.02.1999
(51) Int. Cl.: A23G 1/21, A23G 1/20

(54) **Apparatus comprising independently suspended core members for the production of shells of fat-containing, chocolate-like masses**
Vorrichtung mit unabhängiger Aufhängung der Stempel zur Herstellung von Schalen aus fetthaltigen, schokoladeähnlichen Massen
Appareil avec des contre-moules à suspension indépendante pour la fabrication de coques en masses contenant des matières grasses , du type chocolat

(30) Priority: 02.11.1998 EP 98203693; 09.11.1998 EP 98203783
(43) Date of publication of application: 30.06.1999
(73) Proprietor: AASTED-MIKROVERK APS, 3520 Farum (DK)
(72) Inventor: Aasted, Lars, 2920 Charlottenlund (DK)
(74) Representative: Heiden, Finn

(56) References cited:
- WO-A-95/32633
- WO-A-97/49296
- DE-C- 19 720 844
- US-A- 5 558 895

## Description

The present invention concerns a system for the production of fat-containing, chocolate-like masses, in particular for chocolate articles, by which an amount of liquid mass is deposited into more than one mould cavity, whereafter more than one core member is immersed into the mass forming the shells.

Systems for moulding of shells of fat-containing, chocolate-like masses through immersion of a core member into the liquid mass of an associated cavity and thereby bringing the mass into the desired shape are today well-known within the prior art, and are being used extensively by the chocolate making industry.

EP 0 589 820 A1 (AASTED-MIKROVERK APS) describes the first commercially available method and associated apparatus of the displacing type for industrial use. It relates to a method, where the chocolate-like mass under crystallisation solidifies from the mould cavity and inwardly to form the outer shape of the shell, the temperature of the mould cavity being lower than the temperature of the tempered mass, that a cooling member having a temperature lower than 0°C is immersed into the mass and kept in the mass in a fully immersed position for a predetermined period of time. The cooling member is furthermore immersed immediately into the mass after this has been filled into the mould cavity and shaken out. The associated apparatus furthermore comprises means of controlling the up- and down movement of the cooling members, as well as controlling residence times in the fully immersed position. However, by this early teaching within the technical field of the present invention the chocolate-mass is filled into the mould cavity in an amount, which is typically about 10 % larger than the volume of the finished chocolate-shell.

Generally within the present field, chocolate-like masses are suspensions of non-fat particles, such as sugar, milk powders and cocoa solids in a liquid fat phase. The fat phase in most cases comprises an extent of the genuine cocoa butter of until around 30 %, but may comprise substitutes as well. Such substitutes may be in the form of other types of fat-containing oils. Chocolate-like masses where the cocoa butter has been replaced wholly or partly by other fats, are often named commercially as compound chocolate, in which the cocoa butter has been replaced by palm-kernel oil, or corresponding oils. Shells made of 100 % fat being cocobutter or compound is also possible.

In the subsequent treatment of the ready-finished shell, the shell is frequently provided with a centre mass of a creamy or liquid food material, which differs from that of the shell. Thereafter the shell is closed either with other shell parts along the periphery of the shell or by means of a coating or flat bottom. For this purpose, it is very important that the periphery of the shell is complete or it will not be possible to make a tight joint.

Furthermore it is possible to join a produced shell with other types of shells immediately after being moulded, so that the finished food article being present as a hollow body e.g. in the form of eggs or figures, such as pixies and the like. In joining shells to produce hollow articles, it is of great importance that especially the rim of the shells is complete.

Furthermore, it should be mentioned that manufactured shells do not have to consist of just one layer of material but may e.g. consist of several layers of chocolate-like material. For example, one shell or part of made of dark chocolate may be provided with a further interior coating of white chocolate (or vice versa or any colour) by the same method and system even before the shell moulded first leaves the mould cavity.

The chocolate-like masses are deposited and shaken into the mould cavity in a tempered liquid state. For several decades, the technique of providing tempered chocolate-like masses has been well known to the persons skilled within the art of chocolate making. Chocolate-like mass being heated to 40-50°C enters the process of tempering in which the mass in cooled down to around 27-32°C, whereby crystallisation is initiated. Thereafter, the chocolate-like mass is re-heated, normally not more than 2°C providing the ready-tempered chocolate-like mass with a content of stable β crystals in an amount lesser than 5 %. Thereby lower melting crystals are re-melted, so that only stable crystals remain in the ready-tempered mass. Such a process is for example performed by the AMK-tempering machines provided by Aasted-Mikroverk ApS, Denmark.

The quality of the ready-moulded chocolate shells has always been determined firstly by the state of the tempered chocolate mass. The skilled person knew that good flavour and mouth feeling chocolate, high gloss, high resistance to fat bloom as well as enhanced resistance to warm or heat was the consequence of the optimum tempering state, in which the liquid chocolate comprises only stable β crystals, especially small crystals before being deposited into the mould. However, before the invention of EP 0 589 820 B1 (AASTED-MIKROVERK APS), the skilled person thought that the setting of the deposited chocolate in the mould should be gentle and time consuming to an extent of often ½ - 1 hour before the moulded shell could be released from the mould cavity. By the invention of EP 0 589 820 B1 this prejudice was turned upside down, thereby discovering a method by which the deposited tempered chocolate was set rapidly e.g. typically within 10 seconds providing tremendous fast production rates for chocolate making industry.

DE 197 20 844 C1 (KMB PRODUCTIONS AG) discloses a system for moulding of shells primarily for moulding of chocolate shells. This system comprises multiple core members firmly fixed to a holding device. However, since the core members are firmly fixed it is not possible to lower the individual core members to different depths to compensate for inaccuracies in the dosage of chocolate or for differences in the depth of the individual mould cavities. The core members will simply all be lowered to the same pre-determined depth.

EP 0 715 813 (GEBR. BINDLER) discloses a similar system for moulding of chocolate articles, especially for chocolate shells, through displacement of the chocolate mass in a mould by immersion of a core member. The disclosed embodiments all have a multiplicity of core members firmly fixed to the same holding device. As in the above DE disclosure, the system has no way of compensating for inaccuracies in the dosage of chocolate or for differences in the depth of the individual mould cavities. Thus, if for some reason, one of the mould cavities of a mould element is clogged and the associated core cannot be immersed further than the depth of the obstruction, all the fixed cores will be halted and consequently all the shells of that mould element will be incomplete.

In practise, it has proven impossible to manufacture mould elements where all the mould cavities have exactly the same size, volume and especially depth. Furthermore, it is not possible due to mass viscosity changes to achieve exact dosage of the chocolate when it is deposited into the mould cavities. Consequently, when multiple core members are firmly fixed to the same holding device are lowered into the mould cavities the resulting displacement of chocolate will give rise to shells of different size. In order to ensure that all articles moulded were complete, it was necessary to compensate for these variations by over-dosing the deposited amount of chocolate, thus leaving a variable rim of surplus chocolate above the surface of the mould element.

WO 95/32633 (AASTED-MIKROVERK APS) describes a method and a system of the displacing type, by which an engagement ring is mounted peripherally around the cooling member by a press-fit or by threaded engagement. The engagement ring comprises at least one peripherally extending recess defining the moulded shell rim to compensate for inaccuracies in the deposited amount of chocolate. However, this teaching does not disclose anything about how more than one core member may be arranged to compensate for the above-mentioned inaccuracies.

For large and complex figures such as chocolate bars, Santa Clauses, Easter Bunnies et cetera one cannot be sure that the geometry of the figures are complete by this prior art, since the chocolate may not always rise to the surface of the cavity when the core member is completely immersed. The recess in part of the periphery, e.g. the part closest to the centre of the article, may simply take up too much of the surplus chocolate. Furthermore, since the core members are all fixed to the same holding device, it is not possible to lower them to different positions to achieve complete filling of all the shell volumes. In a large mould element, which may comprise multiple cavities, some articles will be complete, some incomplete and in some cases chocolate mass will be forced out through the closure means to contaminate this.

The present invention comprises a system for the production of shells of fat-containing, chocolate-like masses, in particular for chocolate articles, comprising more than one mould cavity to receive the mass, more than one associated core member to be immersed into the mass, the core members being independently suspended from a holding device. By independent is meant that the suspension of one core member cannot affect the suspension of the other cores. Similarly, the suspension of one single core is not affected by the suspension of the other cores.

Hereby is obtained that the individual core members can be lowered to different depths to make all articles in a given mould element complete, irrespective of variations in the volume or actual depth of the mould cavities or in the amount of deposited chocolate. This provides unforeseen flexibility of the moulding system, which is capable of compensating for variations that are far greater than those actually experienced. If one mould cavity in a mould element contains significantly more liquid chocolate than the others, the core member associated with this mould cavity will simply stop its vertical travel before the other core members and due to the independence of the suspension the continued vertical travel of the remaining core members will not be affected. If on the other hand, significantly less chocolate has been deposited into a mould cavity, the associated core will continue its vertical travel, independently of the other cores, to the point where this article is also complete. The same will apply in case of a significantly deeper or less deep mould cavity. The bottom part of the shells may vary slightly in thickness.

By a preferred embodiment, the system comprises means adapted to guide a vertical travel of the independently suspended core members in relation to the holding device. By this, improved precision in the positioning of the core members in relation to the mould cavities is obtained. Thus, the thickness of the shells will be uniform in the whole circumference of the shell.

One way of providing enhanced and secure guidance is to provide sliding surfaces that engage opposite sliding surfaces. The sliding surfaces may be provided on the core members, on the holding device or on a separate guidance means. The sliding surfaces may furthermore be provided with a lubricant to reduce the friction and/or to improve contact cooling.

The top part of the core members may advantageously project into the holding device. Thereby especially secure engagement to the holding device is obtained. By thus mounting the cores countersunk into the holding device a strong and compact system is obtained. Furthermore, it becomes possible to make the cavity closure means an integrated part of the holding device.

The vertical travel of the independently suspended core members in relation to the holding device may also be provided by a separate guidance. The means used to provide guidance may be laid out in many different ways. The guidance may thus be fixed to the core members or to the holding device and be moveable in relation to the other part. Furthermore, the guidance may be provided by having a top part of the core members adapted to provide independent suspension and guidance for the vertical travel of the core members.

The independent suspension of the cores may be laid out in different ways as either compressible or expandable means. Both types of means may be either metal or rubber spring means electromagnetic means, weight means, mechanical means, hydraulic means, or pneumatic means. These means ensure that the pressure exerted on each core member is the same and that their immersion into the chocolate mass stops at the point where the mould cavity is completely filled thereby preventing waste.

According to the invention, the system may also comprise a seal provided on the independently suspended core members to allow pressure build up between the top of the independently suspended core members and opposite surfaces of the holding device. This seal may alternatively be provided on the holding device instead. Thereby is obtained that it is possible to build up pressure between the cores and the holding device. This provides extremely uniform suspension of the core members.

According to a preferred embodiment of the invention, the system may comprise means adapted to push the independently suspended core members forward from the holding device and adapted to retract the independently suspended core members into the holding device. By this embodiment, the holding device is first lowered unto contact with the upper surface of the mould element. Then the cores are projected from the holding device into the chocolate mass. Lowering the cores in this way has been found to provide exceptionally good displacement of the chocolate in the mould, irrespective of the geometry of moulded articles. Even with large and complex figures, the chocolate is displaced uniformly to determine the complete geometry of the article. The trapped in air will escape between mould and rimplate and/or rimplate and core member.

Finally, the system may comprise mould cavity closure means extending peripherally around or on the core members and shell rim moulding surfaces, which together with outer surfaces of the cores and inner surfaces of the mould cavities determine the full geometry of the moulded shells. According to this embodiment, complete articles with a well-defined edge can be manufactured.

The cavity closure means may furthermore be axially movable in relation to the core member. Thereby, the core members can be lowered into the mass after the cavity closure means have been moved unto closure engagement with the cavity. The closed nature of the cavity results in the creation of pressure in the direction of the core members, as the cavities are completely filled with chocolate. This improves the regulation of the vertical travel of the cores provided by the independent suspension.

Finally, the system may comprise the arrangement of load means adapted to press the core members in direction against the cavity. Hereby unforeseen uniform appearance as well as homogeneous mass consistence is obtained. The density of the moulded mass material is furthermore much more uniform as by prior methods, whatever the part or geometry of the article may be. In other words, every article produced has an optimal quality and properties as desired. Consequently, the waste percentage is vanishing.

The invention will be explained more fully below with reference to particularly preferred embodiments as well as the drawings, in which:
- Figure 1: is a schematic view of the steps performed to reach a packaged shell product.
- Figure 2: is a schematic view of a turning point of an endless carrier for the mould elements, carried through the steps of Figure 1.
- Figure 3: is a sectional view along A-A of the mould element of Figure 2.
- Figure 4: is an embodiment shown as a lateral, schematic, cross-sectional view through one of the core members and an associated, underlying mould cavity filled with chocolate.
- Figure 5: is a view of the same in a closed position, with the core member fully immersed into the chocolate mass.
- Figure 6: is a lateral, schematic, cross-sectional view through a holding device, carrying several core members and underlying mould cavities such as the type depicted in Figure 3, which are now filled with liquid mass.
- Figure 7: is a view of the same in a closed position.
- Figure 8: is a lateral, schematic, cross-sectional view through a holding device, carrying several core members and underlying mould cavities in the closed position. The tool is similar to the tool of figure 7 but without pneumatic/hydraulic means.
- Figure 9: is a lateral, schematic, cross-sectional view through a holding device carrying several core members, as well as an associated underlying mould element such as the type depicted in Figure 3, by which the cavities are now filled with liquid mass.
- Figure 10: is a lateral, schematic, cross-sectional view through a holding device, carrying several core members and comprising a seal and lubricant.
- Figure 11: is a schematic, cross-sectional view through different embodiments of the profile of the seal, and
- Figure 12: is a further embodiment disclosed in the same manner as by fig. 4.

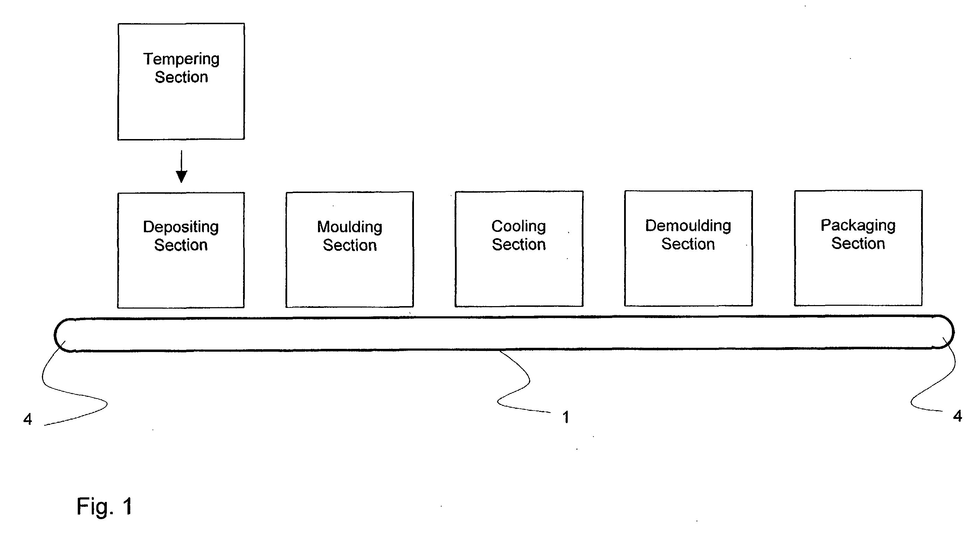

Steps to be performed for reaching a packed shell product are schematically disclosed in fig. 1.

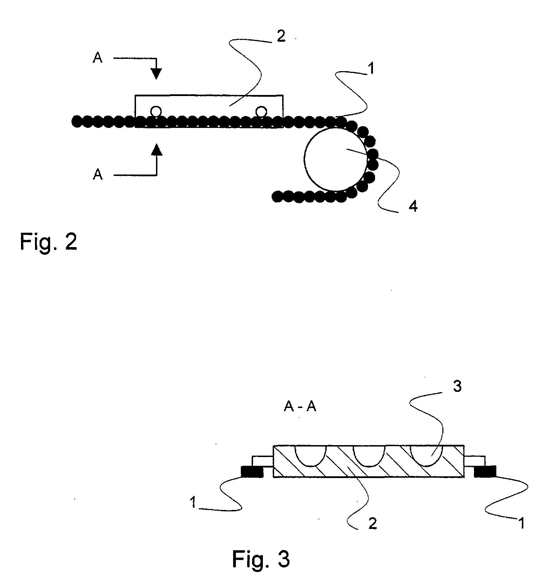

Between two turning points 4 an endless carrier 1 normally carries mould elements 2 through the depositing section, the moulding section, the cooling section, the demoulding section and finally to the packaging section. Thereafter, the endless carrier belt 1 returns the mould elements 2 to the depositing section. The moulding elements 2 may comprise one or even several mould cavities 3, as depicted in fig. 2 and 3.

Furthermore, it should be mentioned, that the fig. 1-3 disclose, that mould elements can be moved intermittent or continuously through the specific sections, such as the moulding or shell forming section. In the shell forming section, the moulding elements may be kept stationary when the associated core members are immersed, or the core members may be moved synchronously with the mould elements within the moulding section. Means for achieving such movements are well known to the skilled person within the art of chocolate making.

As described in EP 0 589 820 B1 (AASTED-MIKROVER APS) such systems comprise means for controlling the up and down movement of the core members as well as means for controlling the residence times of the core members in the fully immersed position, by the present invention especially to a predetermined time period. Furthermore, by the present invention, the residence times are typically lower than 60 seconds, though the invention is not restricted to such limitation. The residence times are more preferably lower than 20 seconds and are found to be especially expedient when between 0,1 and 5 seconds.

In the tempering section, the fat-containing, chocolate-like mass is normally tempered to a temperature of around 27-34°C having a content of stable β crystals. However, the actual temperatures as well as contents of stable β crystals depend on the choice of the skilled person for the chocolate-like mass in question. The tempered chocolate-like mass is delivered to the depositing section, in which the liquid mass is deposited and shaken into the mould cavity 3. In the shell forming section to follow, a core member is immersed into the mass and the shell is actually formed. Thereafter, a cooling section may follow, as well as a section for demoulding the shell from the mould, and finally a packaging section, in which the shells are packed for delivery. The systems of the present invention are subject of the shell forming section.

It should be mentioned that in the remaining drawings of this description, it is disclosed that the tempered mass 5 already has been deposited and shaken into the mould cavities 3, 3', 3".

Means is arranged to control the temperature of the core members. This means could comprise well known temperature regulation devices such as a temperature measuring sensor connected via a wire to a control unit, which controls the regulation flow of a media, which circulates via channels into the holding device. However, these temperature regulation devices may be laid out in many different ways, such as comprising refrigeration or electrical heating, as long as they to the skilled person achieves an essentially constant temperature of the core member. The temperature of the core member could be controlled to be equal to or lower than 0°C, but could even be controlled to be higher than 0°C. An especially good quality of the shells as well as fast and efficient production has been achieved, when the temperature of the core member is controlled to be lower than around 10°C typically in an controlled dry environment. Especially excellent results have been obtained, when the temperature of the core member is being controlled to be lower than -5°C.

Even the temperature of the mould cavity may be controlled, especially to between 10°C and 30°C. Thereby it has astonishingly been discovered, that a smooth outer surface of the shells is obtained without having any shrinks air holes or depressions, such as the so called "Saturn" rings.

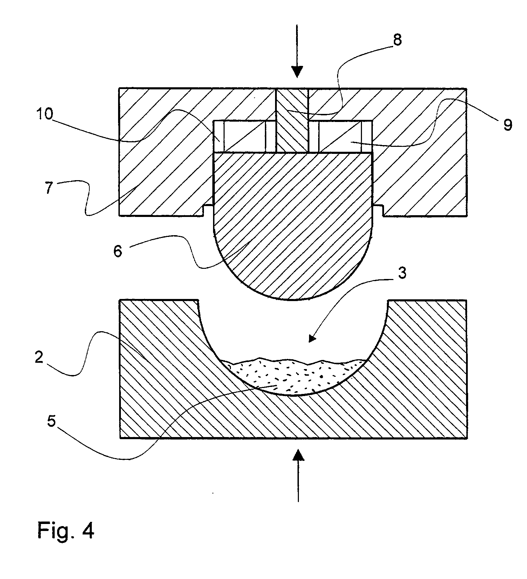

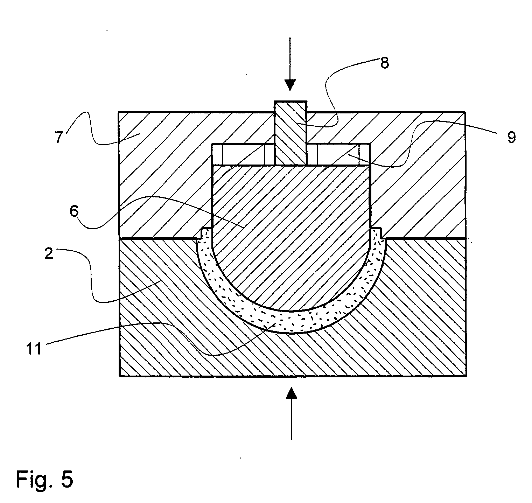

The principle of the invention is schematically disclosed in Figure 4 and 5. For clarity, only one core member is disclosed in these figures, but it should be stressed that the invention relates to systems with more than one core member. By this first embodiment, the core member 6 is axially movably suspended from a holding device 7, which controls the movements of the core 6. By this embodiment, the closure means constitutes part of the holding device 7. The core member 6 is guided vertically in relation to the holding device 7 by means of a known type of slide guidance 8. The suspension may typically comprise compressible spring means 9 of any kind. However, a pneumatic or hydraulic pressure effected at the top surface 10 of the core member may create the appropriate suspension effect as well, either alone or in combination with the mentioned spring means 9.

In the embodiments disclosed schematically in Figures 4-9, the mould cavities are all closed by means of cavity closure means. This cavity closure means may be an integrated part of the holding device. This can be obtained by having the top part of the core members project into the holding device. Alternatively, the closure means may be an independent part of the system. Whatever the embodiment of the closure means, it has been found especially advantageous that the closure means are axially movable in relation to the core members. Thereby the core members can be lowered into the liquid mass after the closure means have been brought into contact with the upper surface of the cavity element. This ensures that the chocolate does not escape from the top of the mould cavities and that the mould element is not contaminated with chocolate.

It should be stressed, however, that the invention is not restricted to embodiments with such closure means but that the basic principle of independent suspension may also be used in systems without such closure means.

By moving the core member 6 down into the mass 5, the holding device 7 itself or the possibly intermediary closure ring comes to secure engagement with the upper surface of the mould element 2 as disclosed in fig. 5. By doing so, the core member 6 is immersed into the mass to achieve complete filling of the enclosed mould cavity thereby building up pressure in the mass, as the compression of the spring means 9 forces the core 6 in direction against the bottom of the mould cavity 3.

By adjusting the loadforce of the spring means 9 the actual pressureforce obtained in the mass could be essentially the same every time when a new article is moulded. This could be done, for example by changing the numbers or actual size of a row of disc-springs or the like compressible spring means. The actual pressure force obtained in at the pressurised top surface of the core member is expected to be lower than 100 x 10⁵ N/m².

Hereby is obtained that the individual core members can be lowered to different depths to make all articles in a given mould element complete, irrespective of variations in the actual depth of the mould cavities and the amount of deposited chocolate. This provides unforeseen flexibility of the moulding system, which is capable of compensating for variations that are far greater than the variations actually experienced. If one mould cavity in a mould element contains significantly more liquid chocolate than the others, the core member associated with this mould cavity will simply stop its vertical travel before the other core members and due to the independence of the suspension the continued vertical travel of the remaining core members will not be affected. If on the other hand, significantly less chocolate has been deposited into a particular mould, the associated core will continue its vertical travel, independently of the other cores, to the point where this article is also complete. The same will apply in case of a significantly deeper or less deep mould cavity. A consequence of the individual suspension of the core members is that the bottom part of the shells may vary slightly in thickness

As shown in Figures 4 and 5 the system may comprise a separate guidance means 8, which could be in the embodiment of a slide guidance but could include other embodiments as well. The purpose of the guidance means 8 is to improve the precision of the vertical travel of the core members in relation to the holding device. The guidance means may be fixed to either the holding device or the core member. The guidance means could for instance be secured using a known type of threaded engagement means. Alternatively, the guidance means may be integrated into the holding device in the embodiments where the top part of the cores project into the holding device whereby the holding device provides the necessary guidance.

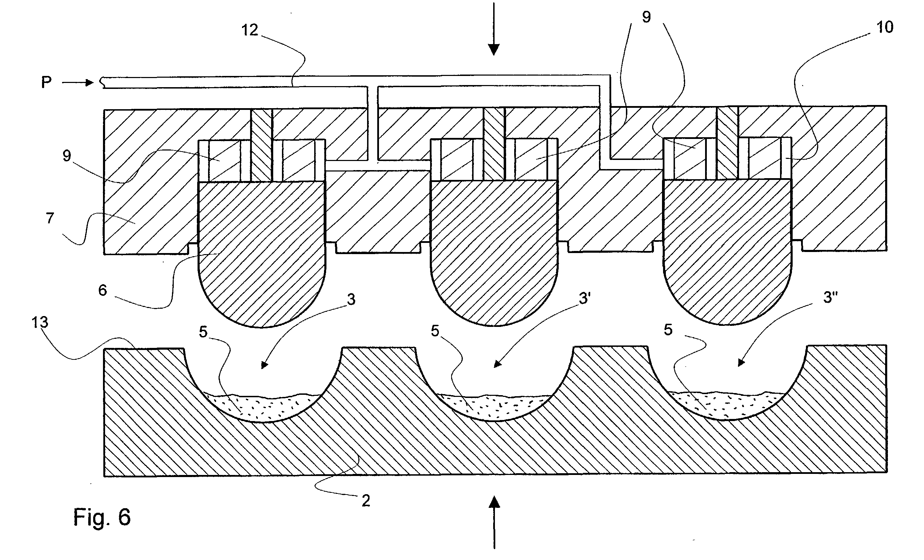

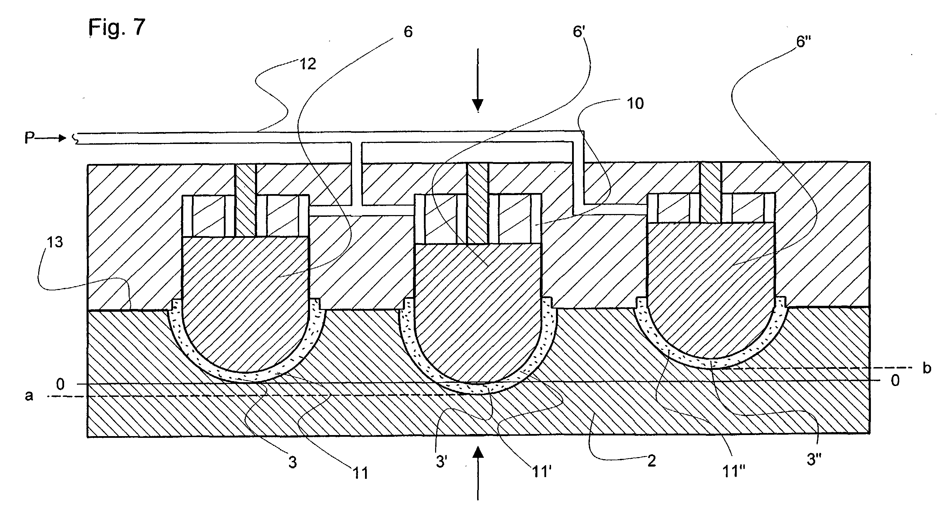

By the embodiment of fig. 6 and 7, the system comprises more than one core member 6. By the disclosed example the system comprises three core members 6 guided by the same device 7, and three underlying mould cavities 3, 3', 3" in a mould element 2. However, the specific numbers of mould cavities and associated core members are unlimited within this aspect of the invention.

Important is, that the holding device 7 comprises more than one core member, by which at least two are independently suspended from the holding device. Thereby is obtained the unexpected advantage, that essentially the same predetermined pressureforce may be obtained in every mould cavity 3, 3', 3" whatever the actual depth of the specific cavity may be under the upper surface 13 of the mould element 2. By achieving this, one is sure, that the deposited amount of mass in every cavity 3, 3', 3" of the mould element completely fills out the specific mould cavity when all the core members 6, 6', 6" are immersed at the same time as depicted in fig. 7.

As schematically shown in fig. 7, every mould element 2 often exhibits different depths and volume of the specific mould cavities from the top surface 13 of the mould element. The differences may typically be up until around 1 mm in deviation - plus (a) as depicted by the cavity 3' or minus (b) as depicted by the cavity 3" from the actually desired depth depicted by the cavity 3. Such inaccuracies in the mould elements are known.

Furthermore, the actually deposited amount of mass in each cavity becomes more or less irrelevant as each core member 6, 6', 6" simply automatically adapts its immersing depth in accordance herewith always obtaining, that the specific mould cavity in question becomes completely filled out with mass. In fig.7 it is shown, that in the closed position of the system, the core member of the cavity 3' has moved distance a further down than the core member of the first cavity 3, and that the core member of the cavity 3" has stopped a distance b before reaching the position of the core member of the first cavity 3, yet still securing total filling of each cavity. By the prior art where the core members were all fixed to the holding device the positions of the immersed core members always remained the same in relation to the mould cavities, what ever the actual depth of the cavity may be or the deposited amount of mass may be. The result was, that unacceptable variations in the appearance, the thickness as well as homogeneity occurred.

At disclosed by the channels 12, a pneumatic or hydraulic pressure may advantageously be brought to the top of each core member thereby obtaining the same pressureforce for each of the shells moulded in the mould element at the same time. The applied pneumatic pressure could for example be lower than 10 bar. The means used to create and adjust the pressure may comprise a valve to ensure that the pressure exerted on the top 10 of the core members remains the same as the immersion of some of the cores is stopped and the room above the cores is thereby reduced.

By the embodiment of fig. 6, 7 an especially fast and productive system for shell making is available, yet providing an unforeseen high quality of the complete batch of shells produced.

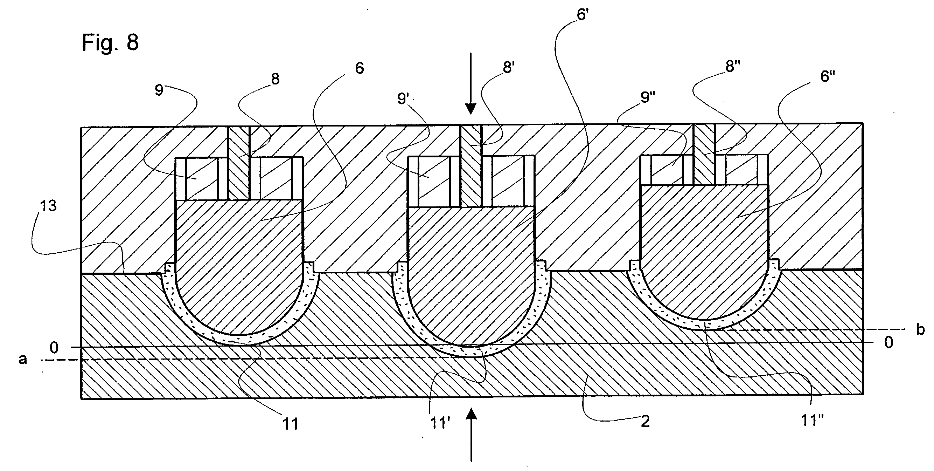

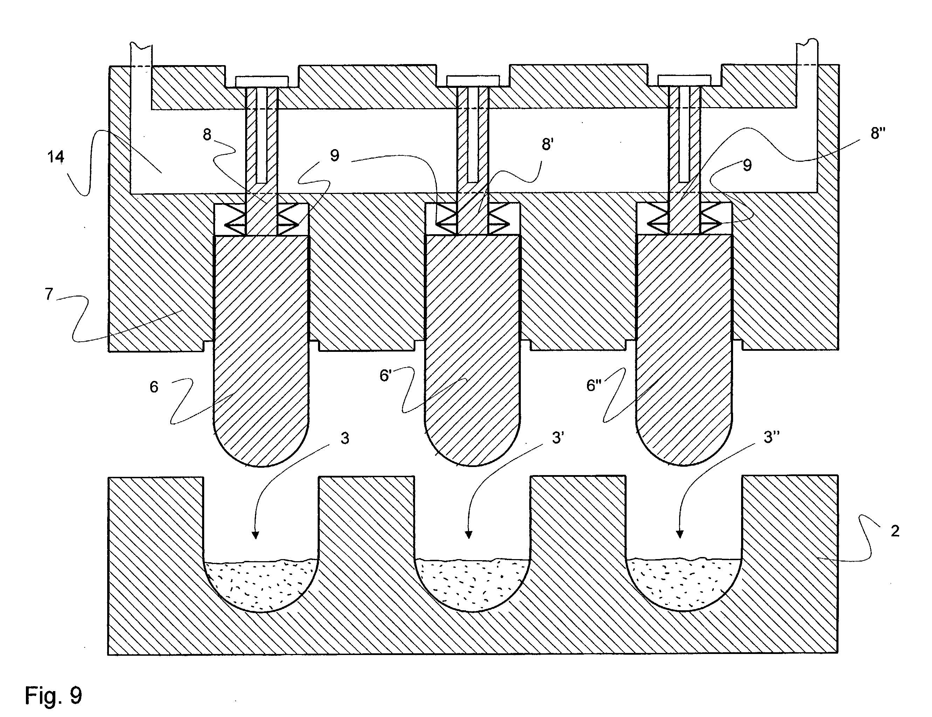

As disclosed schematically in Figure 8, the suspension of several core members may also be provided by compressible spring means 9, 9', 9". By this embodiment, the immersion of one of the core members 6, 6', 6" has been stopped as it reached depth b whereas the immersion of the others has continued unaffected by this fact. The other cores have stopped at depths 0 and a respectively as the associated cavities have been completely filled. A similar moulding tool is disclosed schematically in Figure 9. By this embodiment, the core members 6, 6' and 6" are axially movably suspended from a holding device 7, which controls the axial movements of the cores 6, 6' and 6". By the disclosed embodiment, the closure means may constitute part of the holding device 7. The core members 6, 6' and 6" are guided axially in relation to the holding device 7 by means of a known type of slide guidance which comprise the top part 8, 8', 8" of the core members.

The suspension may typically comprise compressible spring means 9 of any kind for providing independent loadings of the core members.

The top parts 8, 8' and 8" of the core members 6, 6' and 6" are arranged in a horizontal channel 14 adapted for the through flow of temperature controlling medium. The medium may be controlled as previously explained. Though not disclosed, the upper end of the top parts 8, 8' or 8" may be provided with a thickening or other means for securing a stop, which restricts the possible downwards movement of the core members.

Especially excellent results have been obtained when the core members are lowered by a two step procedure. This procedure is illustrated schematically in Figure 7. The holding device is lowered by a servo engine or other means to bring the cavity closure means into contact with the upper surface of the mould element 13. Thereafter the core members 6, 6', 6" are lowered by applying a pneumatic or hydraulic pressure through the channel 12 to displace the chocolate and completely fill all the mould cavities 3, 3', 3" of the mould element 2. Experiments have shown that even in the case of significant over- or under-dosage of chocolate (up to +/- 20%) all the shells 11, 11', 11" are complete and surplus chocolate is never pressed out of the tools to contaminate these or the mould elements.

When the shells 11, 11', 11" have been moulded, the cores 6, 6', 6" are lifted again by the pneumatic or hydraulic means 12. Important is that the cavity closure means is still in contact with the shell whereby the delicate rim of the article is protected as the adhesion forces are released by lifting the cores. Two effects are obtained by this embodiment. First, the articles are protected so that the percentage of broken articles is vanishing. Secondly, experiments have shown surprisingly that the cores can actually be lifted slightly earlier than otherwise without damaging the articles. Thereby, increased production speed is achieved.

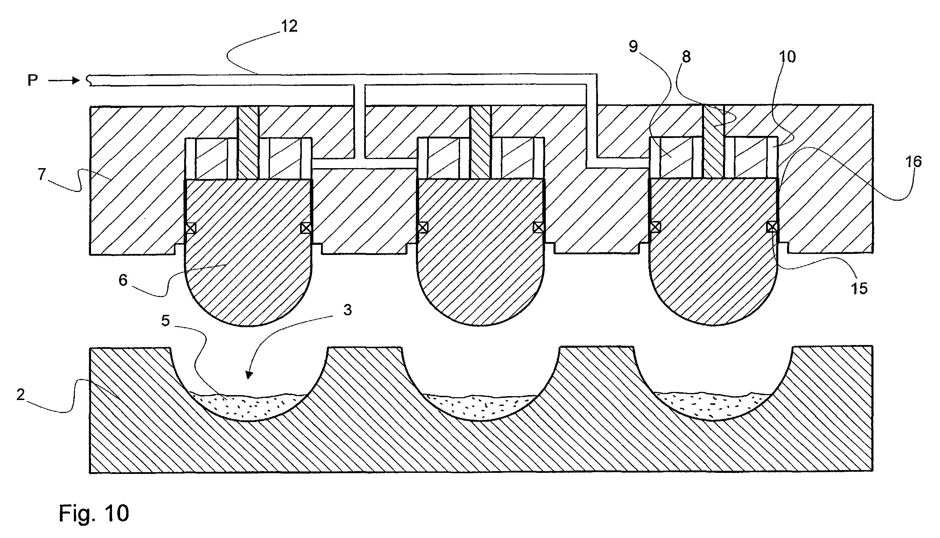

In Figure 10, some additional traits are disclosed schematically. In order to reduce the friction between the moveable parts of the system, especially between the core members and the holding device or between the guidance and either the holding device or the core member it has been found advantageous to provide a lubricant 16 to the sliding surfaces. This lubricant could be in the form of a traditional lubricant, e.g. oil or fat. Surprisingly, it has also been found that a heat conduction compound may provide the necessary lubrication. Important is that the lubricant has a temperature range that goes well beyond the working temperature of the tool members. Important is also that the lubricant does not get into contact with and contaminates the chocolate-like mass.

Figure 10 also disclosed schematically the presence of a seal 15. In the embodiments where a pneumatic or hydraulic pressure is actuated between the top of the core members and the opposite surfaces of the holding device, a seal 15 is preferentially provided between the core member and the holding device. The seal 15 may be provided on the holding device 7 or advantageously on the core members 6, 6', 6". The great advantage of the seal is to seal the chamber 10 above the core member efficiently to allow the build up of pneumatic or hydraulic pressure. Another effect of the seal is that it retains the lubricant behind the seal and prevents it from leaving the sliding surfaces even when pressure is applied to the top of the cores.

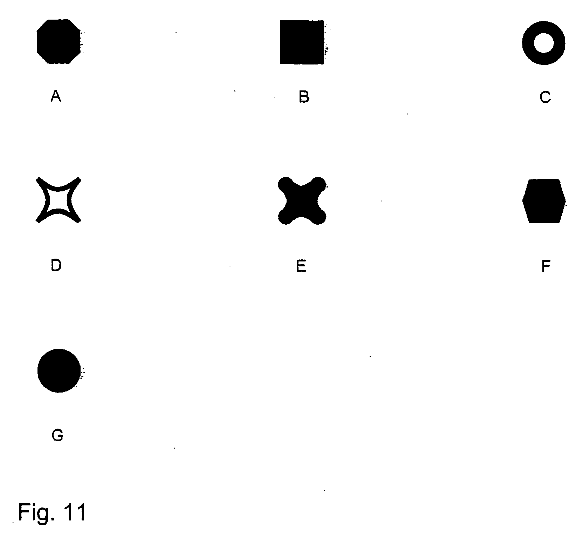

Different embodiments of the seal are disclosed schematically in Figure 11. Very many different embodiments of the seal can be used and the invention is not restricted to any specific profile or material as long as an efficient seal is provided. In many cases, a simple o-ring may suffice, but it has been found advantageous to use seals with a special profile such as four lipped seals. These seals are exceptionally resistant to tear and wear and furthermore provide a double seal, since two lips are always in contact with both the sliding surfaces. The material should be chosen with due consideration of the compatibility between the working temperature of the hydraulic fluid, the lubricant and the seal.

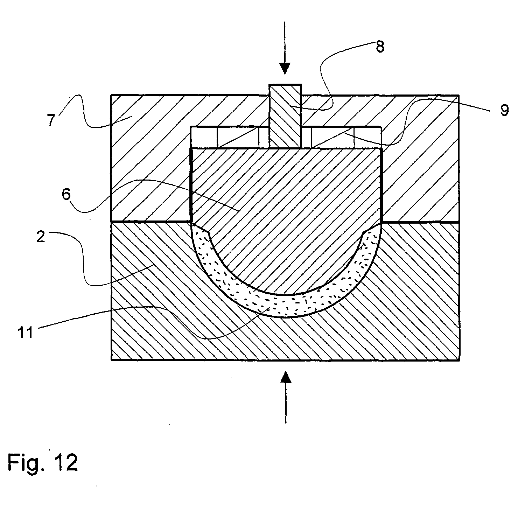

A further embodiment is disclosed in fig. 12, by which the rim of the shell 11 is formed by radially outwards extending surfaces of the core member.

## Claims

1. A system for the production of shells of fat-containing, chocolate-like masses, in particular for chocolate articles,
comprising more than one mould cavity (3, 3', 3") to receive the mass (5, 5', 5"),
more than one core member (6, 6', 6") to be immersed into the mass,
**characterized in that** the core members are independently suspended from a holding device (7).

2. A system according to claim 1, comprising means adapted to guide a vertical travel of the independently suspended core members (6, 6', 6") in relation to the holding device (7).

3. A system according to claim 2, whereby the vertical travel is provided by a pair of opposite sliding surfaces.

4. A system according to claim 1, whereby at least one sliding surface is provided on the holding device (7).

5. A system according to claim 1, whereby at least one sliding surface is provided on the at least one core members (6, 6', 6").

6. A system according to claim 1, whereby at least one sliding surface is provided on a separate guidance means (8, 8', 8").

7. A system according to claim 1, whereby the top part of the core members (6, 6', 6") projects into the holding device (7).

8. A system according to claim 6, whereby the guidance means (8, 8', 8") is firmly fixed to the core members (6, 6', 6").

9. A system according to claim 1, whereby more than one guidance means (8, 8', 8") are firmly fixed to the holding device (7).

10. A system according to claim 1, whereby a top part of the core members (6, 6', 6") is adapted to provide independent suspension and guidance for the vertical travel of the core members.

11. A system according to claim 1, whereby the independent suspension comprises compressible means (9, 9', 9").

12. A system according to claim 1, whereby the independent suspension comprises expandable means.

13. A system according to claim 1, comprising a seal (15) provided on the independently suspended core members (6, 6', 6") to allow pressure build up between the top (10) of the independently suspended core members and opposite surfaces of the holding device (7).

14. A system according to claim 1, comprising a seal (15) provided on the holding device (7) to allow pressure build up between the top (10) of the independently suspended core members (6, 6', 6") and opposite surfaces of the holding device (7).

15. A system according to claim 1, comprising means adapted to push the independently suspended core members (6, 6', 6") forward from the holding device (7).

16. A system according to claim 1, comprising means adapted to retract the independently suspended core members (6, 6', 6") into the holding device (7).

17. A system according to any of the claims 3-6, whereby the sliding surfaces is provided with a lubricant (16).

18. A system according to claim 1, further comprising mould cavity closure means extending peripherally around the core members (6, 6', 6") and comprising shell rim moulding surfaces, which together with outer surfaces of the cores and inner surfaces of the mould cavities determine the full geometry of the ready moulded shells (11, 11', 11").

19. A system according to claim 18, whereby said cavity closure means further being axially movable in relation to the core member (6, 6', 6").

20. A system according to claim 1, further comprising the arrangement of load means adapted to press the core members (6, 6', 6") in direction against the mould cavity (3, 3', 3").

21. A holding device for a system for the production of shells of fat-containing, chocolate-like masses, in particular for chocolate articles, said system comprising more than one mould cavity,
**characterized in that**
the holding device (7) comprises independently suspended core members (6, 6', 6").

22. A holding device according to claim 21, whereby the independent suspension is provided by compressible means (9, 9', 9").

23. A holding device according to claim 21, whereby the independent suspension is provided by expandable means.

## Patentansprüche

1. Vorrichtung für die Herstellung von Schalen aus fetthaltiger, schokoladeähnlicher Masse, insbesondere für Artikel aus Schokolade,
mit mehr als einem Formenhohlraum (3, 3', 3") zum Aufnehmen der Masse (5, 5', 5"),
mehr als einem Kernelement (6, 6', 6") zum Eintauchen in die Masse,
**dadurch gekennzeichnet,**
**dass** die Kernelemente unabhängig voneinander an einer Haltevorrichtung (7) aufgehängt sind.

2. Vorrichtung gemäss Anspruch 1, mit einer Vorrichtung zum Führen der unabhängig aufgehängten Stempel (6, 6', 6") in Bezug auf die Haltevorrichtung (7).

3. Vorrichtung gemäss Anspruch 2, wobei die vertikale Bewegungsrichtung durch ein Paar von gegenüberliegenden Gleitoberflächen bereitgestellt wird.

4. Vorrichtung gemäss Anspruch 1, wobei die Haltevorrichtung (7) mit mindestens einer Gleitoberfläche ausgestattet ist.

5. Vorrichtung gemäss Anspruch 1, wobei das mindestens eine Kernelement (6, 6', 6") mit mindestens einer Gleitoberfläche ausgestattet ist.

6. Vorrichtung gemäss Anspruch 1, wobei mindestens eine Gleitoberfläche an einer separaten Führungsvorrichtung (8, 8', 8") vorgesehen ist.

7. Vorrichtung gemäss Anspruch 1, wobei der Oberteil der Kernelemente (6, 6', 6") in die Haltevorrichtung (7) eingepasst ist.

8. Vorrichtung gemäss Anspruch 6, wobei mehr als eine Führungsvorrichtung (8, 8', 8") dauerhaft an der Haltevorrichtung (7) befestigt ist.

9. Vorrichtung gemäss Anspruch 1, wobei mehr als eine Führungsvorrichtung (8, 8', 8") dauerhaft an der Haltevorrichtung (7) befestigt ist.

10. Vorrichtung gemäss Anspruch 1, wobei ein Oberteil der Kernelemente (6, 6', 6") eine unabhängige Aufhängung und Führung für die vertikale Bewegung der Stempel zur Verfügung stellt.

11. Vorrichtung gemäss Anspruch 1, wobei die unabhängige Aufhängung zusammendrückbare Vorrichtungen (9, 9', 9") enthält.

12. Vorrichtung gemäss Anspruch 1, wobei die unabhängige Aufhängung ausdehnbare Vorrichtungen enthält.

13. Vorrichtung gemäss Anspruch 1, mit einer Dichtung (15), die an den unabhängig aufgehängten Kernelementen (6, 6', 6") angeordnet ist, um einen Druckaufbau zwischen der Oberseite (10) der unabhängig aufgehängten Kernelemente und den gegenüberliegenden Oberflächen der Haltevorrichtung (7) zu ermöglichen.

14. Vorrichtung gemäss Anspruch 1, mit einer Dichtung (15), die an der Haltevorrichtung (7) angeordnet ist, um einen Druckaufbau zwischen der Oberseite (10) der unabhängig aufgehängten Kernelemente (6, 6', 6") und den gegenüberliegenden Oberflächen der Haltevorrichtung (7) zu ermöglichen.

15. Vorrichtung gemäss Anspruch 1, mit einer Vorrichtung, die die unabhängig aufgehängten Kernelemente (6, 6', 6") von der Haltevorrichtung (7) wegdrückt.

16. Vorrichtung gemäss Anspruch 1, mit einer Vorrichtung, die die unabhängig aufgehängten Kernelemente (6, 6', 6") in die Haltevorrichtung (7) einzieht.

17. Vorrichtung gemäss einem oder mehreren der Ansprüche 3 bis 6, wobei die Gleitoberflächen mit einem Schmiermittel (16) versehen sind.

18. Vorrichtung gemäss Anspruch 1, weiterhin mit Verschlussvorrichtungen für den Formenhohlraum, welche die Kernelemente (6, 6', 6") umschliessen, und mit Schalenrand-Formflächen, welche zusammen mit den äusseren Oberflächen der Kernelemente und den inneren Oberflächen des Formenhohlraums die kompletten Abmessungen der fertig geformten Schalen (11, 11', 11") festlegen.

19. Vorrichtung gemäss Anspruch 18, wobei die Verschlussvorrichtung für den Hohlraum weiterhin in Bezug zum Kernelement (6, 6', 6") axial beweglich ist.

20. Vorrichtung gemäss Anspruch 1, weiterhin mit einer Anordnung von Lastvorrichtungen, die die Kernelemente (6, 6', 6") in Richtung gegen den Formenhohlraum (3, 3', 3") drücken.

21. Haltevorrichtung für einer Vorrichtung für die Herstellung von Schalen aus fetthaltiger, schokoladeartiger Masse, insbesondere für Artikel aus Schokolade, wobei die Vorrichtung mehr als einen Formenhohlraum enthält,
**dadurch gekennzeichnet,**
**dass** die Haltevorrichtung (7) unabhängig voneinander aufgehängte Stempel (6, 6',6") enthält.

22. Haltevorrichtung gemäss Anspruch 21, wobei die unabhängige Aufhängung durch eine zusammendrückbare Vorrichtung (9, 9', 9") bereitgestellt wird.

23. Haltevorrichtung gemäss Anspruch 21, wobei die unabhängige Aufhängung durch eine ausdehnbare Vorrichtung bereitgestellt wird.

## Revendications

1. Système pour la fabrication de coques en masses contenant des matières grasses, de type chocolat, en particulier pour des articles en chocolat, comprenant
plus d'une cavité de moule (3, 3', 3") pour recevoir la masse (5, 5', 5"),
plus d'un élément noyau (6, 6', 6") à immerger dans la masse,
**caractérisé en ce que** les éléments noyaux sont suspendus de manière indépendante à un dispositif de fixation (7).

2. Système selon la revendication 1, comprenant un moyen adapté pour guider un déplacement vertical des éléments noyaux (6, 6', 6") à suspension indépendante par rapport au dispositif de fixation (7).

3. Système selon la revendication 2, dans lequel le déplacement vertical est fourni par une paire de surfaces de glissement opposées.

4. Système selon la revendication 1, dans lequel au moins une surface de glissement est prévue sur le dispositif de fixation (7).

5. Système selon la revendication 1, dans lequel au moins une surface de glissement est prévue sur au moins un des éléments noyaux (6, 6', 6").

6. Système selon la revendication 1, dans lequel au moins une surface de glissement est prévue sur un moyen de guidage (8, 8', 8") séparé.

7. Système selon la revendication 1, dans lequel la partie supérieure des éléments noyaux (6, 6', 6") fait saillie dans le dispositif de fixation (7).

8. Système selon la revendication 6, dans lequel le moyen de guidage (8, 8', 8") est fixé fermement aux éléments noyaux (6, 6', 6").

9. Système selon la revendication 1, dans lequel plus d'un moyen de guidage (8, 8', 8") sont fixés fermement au dispositif de fixation (7).

10. Système selon la revendication 1, dans lequel une partie supérieure des éléments noyaux (6, 6', 6") est adaptée pour fournir une suspension et un guidage indépendants pour le déplacement vertical des éléments noyaux.

11. Système selon la revendication 1, dans lequel la suspension indépendante comprend des moyens compressibles (9, 9', 9").

12. Système selon la revendication 1, dans lequel la suspension indépendante comprend des moyens expansibles.

13. Système selon la revendication 1, comprenant un joint (15) prévu sur les éléments noyaux (6, 6', 6") pour permettre la montée de pression entre le dessus des éléments noyaux à suspension indépendante et les surfaces opposées du dispositif de fixation (7).

14. Système selon la revendication 1, comprenant un joint (15) prévu sur le dispositif de fixation (7) pour permettre la montée de pression entre le dessus des éléments noyaux (6, 6', 6") à suspension indépendante et les surfaces opposées du dispositif de fixation (7).

15. Système selon la revendication 1, comprenant des moyens adaptés pour pousser les éléments noyaux (6, 6', 6") à suspension indépendante vers l'avant à partir du dispositif de fixation (7).

16. Système selon la revendication 1, comprenant des moyens adaptés pour rétracter les éléments noyaux (6, 6', 6") à suspension indépendante dans le dispositif de fixation (7).

17. Système selon une des revendications 3 - 6, dans lequel les surfaces de glissement sont pourvues d'un lubrifiant (16).

18. Système selon la revendication 1, comprenant en outre des moyens de fermeture des cavités de moule s'étendant périphériquement autour des éléments noyaux (6, 6', 6") et comprenant des surfaces de moulage du bord des coques, qui conjointement avec les surfaces extérieures des éléments noyaux et les surfaces intérieures des cavités de moule déterminent la géométrie totale des coques moulées (11, 11', 11'') prêtes à l'emploi.

19. Système selon la revendication 18, dans lequel ledit moyen de fermeture peut en outre être déplacé axialement par rapport à l'élément noyau (6, 6', 6").

20. Système selon la revendication 1, comprenant en outre le dispositif de moyens de pression adaptés pour presser les éléments noyaux (6, 6', 6") en direction de la cavité (3, 3', 3") du moule.

21. Dispositif de fixation pour un système de fabrication de coques en masse contenant des matières grasses, du type chocolat, en particulier des articles en chocolat, ledit système comprenant plus d'une cavité de moule, **caractérisé en ce que** le dispositif de fixation (7) comprend des éléments noyaux (6, 6', 6") à suspension indépendante.

22. Dispositif de fixation selon la revendication 21, dans lequel la suspension indépendante est fournie par des moyens compressibles (9, 9', 9").

23. Dispositif de fixation selon la revendication 21, dans lequel la suspension indépendante est fournie par des moyens expansibles.
